# EUROPÄISCHE PATENTSCHRIFT

(11) **EP 0 540 919 B1**
(45) Veröffentlichungstag und Bekanntmachung des Hinweises auf die Patenterteilung: **18.01.1995**
(21) Anmeldenummer: 92117688.9
(22) Anmeldetag: 16.10.1992
(51) Int. Cl.: B65H 23/04, B41F 13/02

(54) **Lagerzapfen für Papierleitwalzen von Rotationsdruckmaschinen**
Trunion for guide rolls in rotary printing machines
Tourillon pour rouleaux de guidage de papier dans les rotatives d'impression

(30) Priorität: 24.10.1991 DE 4135102
(43) Veröffentlichungstag der Anmeldung: 12.05.1993
(73) Patentinhaber: KOENIG & BAUER-ALBERT AKTIENGESELLSCHAFT, 97080 Würzburg (DE)
(72) Erfinder: Kübert, Thomas, W-8782 Karlstadt-Karlburg (DE); Glöckner, Erhard, W-8701 Eibelstadt (DE)

(56) Entgegenhaltungen:
- AU-B- 526 845
- DE-A- 3 803 292
- US-A- 3 432 214
- US-A- 4 652 167
- IBM TECHNICAL DISCLOSURE BULLETIN Bd. 27, Nr. 4B, September 1984, NEW YORK US
- Seiten 2316 - 2317 GUZMAN AND LINZELL 'strain-gauged shaft tape tensiontransducer'

## Beschreibung

Die Erfindung betrifft einen Lagerzapfen für Papierleitwalzen von Rotationsdruckmaschinen gemäß dem Oberbegriff des Patentanspruches 1.

Gemäß DE-PS 22 11 598 ist eine Vorrichtung zur Steuerung der Bahnspannung bei Rollenrotationsdruckmaschinen bekannt, bei welcher zwischen zwei Druckeinheiten eine Papierleitwalze angeordnet ist, welche Dehnmeßstreifen in den Lagerzapfen aufweisen, welche zum Messen von höherfrequenten Spannungsschwankungen der Papierbahn vorgesehen sind. Die von den Dehnmeßstreifen kommenden Meßwerte werden in elektrische Größen umgesetzt, durch ein Anzeigeinstrument angezeigt und einer Schalteinrichtung zugeführt, welche verschiedene Signale und Steuerungsvorgänge auslöst, um die Spannungsschwankungen in der Papierbahn auszugleichen. Dabei sind die Lagerzapfen mittels Mutter und Kontermutter gegen das Maschinengestell festgelegt.

Diese Befestigung der Lagerzapfen im Maschinengestell ist insofern nachteilig, als daß beim Festlegen des Lagerzapfens zwei Personen erforderlich sind, die diesseits und jenseits des Maschinengestells benötigt werden. Darüberhinaus besteht beim Festlegen des Lagerzapfens die Gefahr des Verdrehens desselben. Die Lagerzapfen sollen jedoch eine bestimmte Lage einnehmen, die durch die Resultierende der Kräfte aus der Umschlingung der Papierbahn um die Leitwalze und die Anordnung der Dehnmeßstreifen bestimmt wird. Diese Lage ist dann infolge des Verdrehens nicht mehr oder nur mit großem Aufwand garantiert. Die größte Wirksamkeit der Dehnmeßstreifen ist nur dann gegeben, wenn diese in einer Ebene angeordnet sind, die von der Resultierenden der genannten Kräfte rechtwinklig durchdrungen wird.
Weiterhin ist nachteilig, daß eine Mehrzahl von Lagerzapfen bezüglich ihrer Länge, entsprechend der Dicke der Seitenwand des Maschinengestells, vorrätig gehalten werden müssen.

Weiterhin ist gemäß DE-GM 75 07 904 eine Lagerung von zur Papierbahnspannung dienenden Walzen in Rotationsdruckmaschinen bekannt, bei welcher die Walzen Lagerzapfen besitzen, die mit Dehnmeßstreifen ausgestattet sind, um die Papierbahnzugmessung zu bewerkstelligen. Die Lagerzapfen sind auf Lagerböcken des Maschinengestells gehalten. Nachteilig hierbei ist, daß die Lagerböcke für die Lagerzapfen in ihren Befestigungselementen ein Spiel besitzen, so daß bei der Montage der Walzen Ungenauigkeiten auftreten können, die leicht zum Verlaufen der Papierbahn führen.

Der Erfindung liegt die Aufgabe zugrunde, einen universell einsetzbaren, im Maschinengestell gelagerten Lagerzapfen für Papierleitwalzen von Rotationsdruckmaschinen, insbesondere zur Aufnahme von Dehnmeßstreifen zur Steuerung der Papierbahnzugspannung, zu schaffen, welcher leicht verdreh- und montierbar sowie unabhängig von der Dicke der Seitenwand des Maschinengestells im Maschinengestell festsetzbar ist.

Erfindungsgemäß wird diese Aufgabe durch den kennzeichnenden Teil des Patentanspruches 1 gelöst.

Die Vorteile der erfindungsgemäßen Lösung bestehen insbesondere darin, daß der Lagerzapfen im Maschinengestell festgesetzt werden kann, unabhängig von der Anordnung eines Flansches oder eines Gewindes, d. h. ein erfindungsgemäßer Lagerzapfen einer bestimmten Länge kann in verschieden dicken Maschinengestellen eingesetzt werden. Weiterhin ist der erfindungsgemäße Lagerzapfen leicht verdrehbar bis zu 360°, was immer dann wünschenswert ist, wenn die Dehnmeßstreifen zweier Lagerzapfen in einer Brückenschaltung zusammenwirken. Der Lagerzapfen ist mittels einer Bedienperson bei der Montage von der Außenseite des Maschinengestells her leicht handhabbar. Infolge des Einsatzes von Keilen mit einem Winkel von 15° ist eine Selbsthemmung derselben gegeben, so daß ein selbständiges Lösen des Lagerzapfens nicht möglich ist. Mittels einer Stellschraube kann die Selbsthemmung der Keile in einfacher Weise wieder aufgehoben werden. Durch die Anordnung der Lagerung der Papierleitwalze in den Bohrungen eines Maschinengestells ist die Möglichkeit eines ungenauen Einbaues einer Papierleitwalze und somit ein Verlaufen der Papierbahn nahezu ausgeschlossen.

Die Erfindung soll nachstehend an einem Ausführungsbeispiel näher erläutert werden. Die zugehörigen Zeichnungen zeigen
- Fig. 1: den Längsschnitt durch einen erfindungsgemäßen Lagerzapfen;
- Fig. 2: den Schnitt II - II nach Fig. 1, jedoch ohne Darstellung der Seitenwand des Maschinengestells;
- Fig. 3: die Darstellung des Lagerzapfens in Gesamtansicht A nach Fig. 1, jedoch ohne Seitenwand des Maschinengestells und ohne Papierleitwalze;
- Fig. 4: die Teilansicht B nach Fig. 1 mit abgenommener Abdeckung für die Dehnmeßstreifen.

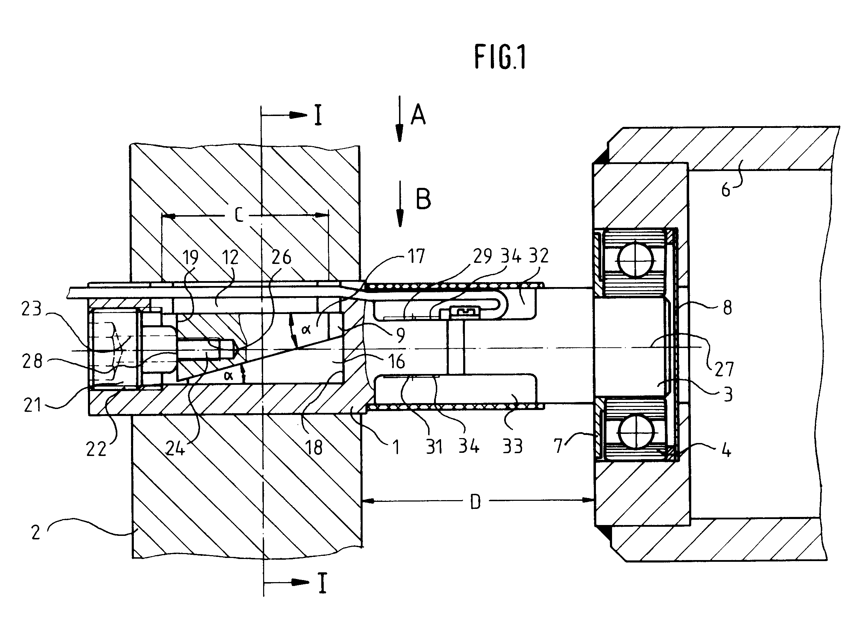

Gemäß Fig. 1 wird ein erfindungsgemäßer Lagerzapfen 1 im Längsschnitt gezeigt, welcher einerseits in einer Bohrung der Seitenwand 2 eines Maschinengestells festklemmbar ist und andererseits mit seiner Abdrehung 3 in ein Kugellager 4 einer Papierleitwalze 6 eingreift. Das Pendelkugellager 4 wird in axialer Richtung einerseits von einer Deckscheibe 7 und andererseits von einem Distanzring 8 begrenzt. Die nicht dargestellte rechte Seite der Papierleitwalze 6 ist ebenfalls über einen nicht dargestellten Lagerzapfen in einer nicht dargestellten Seitenwand des Maschinengestells gelagert. Die in der Seitenwand 2 befindliche Seite des Lagerzapfens 1 weist einen Klemmbereich C auf, welcher eine in axialer Richtung verlaufende Sacklochbohrung 9 besitzt, die mit drei sich radial in Richtung Mantel 11 des Lagerzapfens 1 gerichtete und axial verlaufenden Schlitzen 12; 13; 14 in Verbindung steht. In der Sacklochbohrung 9 des Klemmbereiches C befinden sich zwei gegeneinander verschiebbare Keile 16; 17, deren Steigungswinkel α etwa 15° beträgt. Durch Druck auf die Stirnseiten 18; 19 der Keile 16; 17 werden diese aufeinander zubewegt und spreizen die Schlitze 12; 13; 14; auf, so daß im Bereich C eine Klemmwirkung des Bereiches C des Lagerzapfens 1 in der Bohrung der Seitenwand 2 erfolgt.
Dazu stützt sich der Keil 16 mit seiner Stirnseite 18 auf dem Grund der Sacklochbohrung 9 ab. Die Stirnseite 19 des Keiles 17 liegt an einer Druckschraube 21 an, welche am Anfang der Sacklochbohrung 9 in einem Innengewinde 22 geführt ist. Infolge des Keilwinkels α von ca. 15° erfolgt eine Selbsthaftung der Keile 16; 17 aufeinander. Soll der Lagerzapfen 1 aus der Bohrung in der Seitenwand 2 verdreht oder entfernt werden, so wird die Druckschraube 21 mittels eines Innensechskantschlüssels um einige Gewindegänge gelockert und nachfolgend wird in eine in der Druckschraube 21 in axialer Richtung verlaufende Bohrung 23 eine Stellschraube 24 eingebracht, welche in eine Gewindebohrung 26 eingeschraubt wird. Die Gewindebohrung 26 befindet sich in der Stirnseite 19 des Keiles 17 und verläuft in axialer Richtung in der Flucht der Mittellinie 27 des Lagerzapfens 1. Infolge der Auflage des Kopfes der Stellschraube 24 auf einer Stützfläche 28 der Bohrung 23 und der Drehbewegung der Stellschraube 24 zwecks Wirkverbindung mit der Gewindebohrung 26 des Keiles 17, wird der Keil 17 aus seiner Selbsthemmung gelöst, so daß die Klemmwirkung im Bereich C aufgehoben ist.

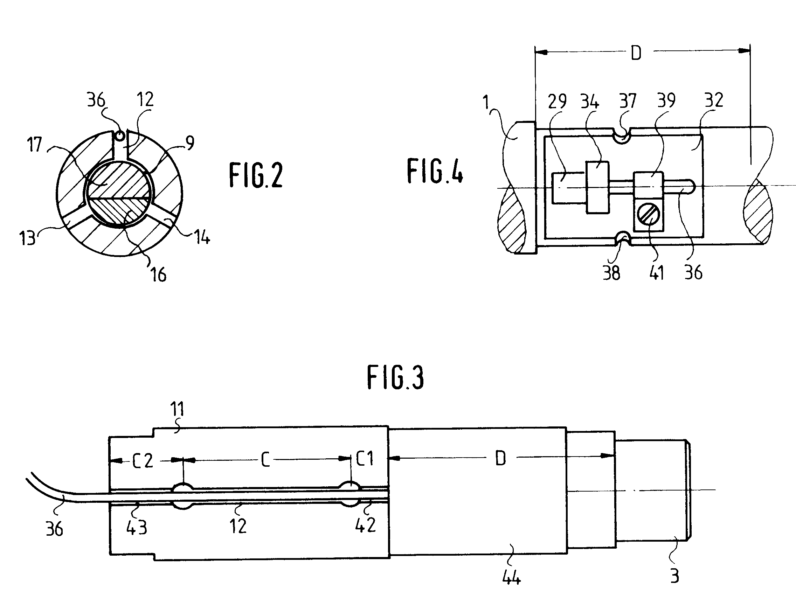

Im Bereich D des Lagerzapfens 1 sind die Dehnmeßstreifen 29; 31 angeordnet (siehe auch Fig. 4). Die Dehnmeßstreifen 29; 31 befinden sich jeweils in gegenüberliegenden Ausnehmungen 32; 33 der Mantelfläche 11. Die Bodenflächen der Ausnehmungen 32; 33 verlaufen parallel zueinander. Die Ausnehmung 32 besitzt Lötstützpunkte 34, welche die Ausschlüsse der Dehnmeßstreifen 29; 31 mit den Adern eines Kabels 36 verbindet. Um die Ausschlüsse der Dehnmeßstreifen 29; 31, welche sich in den Ausnehmungen 32; 33 befinden, für einen Kabelanschluß zusammenzubringen, sind am Mantel 11 des Lagerzapfens 1 im Bereich D am Mantel 11 verlaufende Nuten 37; 38 vorgesehen. Das Kabel 36 ist mittels einer Kabelschelle 39 abgefangen, die von einer Schraube 41 gehalten wird. Das Kabel 36 wird im Bereich C1 und C2 des Lagerzapfens 1 in einer in axialer Richtung im Mantel 11 verlaufenden Nut 42; 43 sowie zwischen den Nuten 42; 43 im Schlitz 12 geführt, so daß dieses einer nicht dargestellten Meßeinrichtung zugeführt werden kann. Die Ausnehmungen 32; 33 können nach erfolgter Montage der elektrischen Einrichtungen 29; 31; 34; 36; 39; 41 mittels eines geeigneten Isoliermaterials ausgeführt werden und mit einer Schutzhülse 44 versehen sein.

Der Lagerzapfen 1 ist über das elektrische Kabel 36 mit nicht dargestellten elektrischen Einrichtungen verbunden.

So kann das elektrische Kabel 36 zu einem Wandler geführt sein, in welchem die elektrischen Größen umgesetzt, durch Anzeigeinstrumente angezeigt und einer Schalteinrichtung zugeführt werden. Diese Schalteinrichtung kann bei Abweichungen vom Normalwert der Papierbahnspannung die Auslösung von akustischen und optischen Warnsignalen veranlassen, so daß eine Korrektursteuerung von Hand erfolgen kann.
Je nach erwünschtem technischem Aufwand kann jedoch daraufhin auch über den Rechner der Rotationsdruckmaschine eine Regelung der Papierbahnspannung veranlaßt werden.

### Teileliste

- 1: Lagerzapfen
- 2: Seitenwand
- 3: Abdrehung
- 4: Kugellager
- 5: -
- 6: Papierleitwalze
- 7: Deckscheibe
- 8: Distanzring
- 9: Sacklochbohrung
- 10: -
- 11: Mantel
- 12: Schlitz
- 13: Schlitz
- 14: Schlitz
- 15: -
- 16: Keil
- 17: Keil
- 18: Stirnseite
- 19: Stirnseite
- 20: -
- 21: Druckschraube
- 22: Innengewinde
- 23: Bohrung
- 24: Stellschraube
- 25: -
- 26: Gewindebohrung
- 27: Mittellinie
- 28: Stützfläche
- 29: Dehnmeßstreifen
- 30: -
- 31: Dehnmeßstreifen
- 32: Ausnehmung
- 33: Ausnehmung
- 34: Lötstützpunkt
- 35: -
- 36: Kabel
- 37: Nut
- 38: Nut
- 39: Kabelschelle
- 40: -
- 41: Schraube
- 42: Nut
- 43: Nut
- 44: Schutzhülse
- C1: Bereich
- C2: Bereich
- C: Klemmbereich
- α: Winkel
- D: Bereich

## Patentansprüche

1. Lagerzapfen für Papierleitwalzen von Rotationsdruckmaschinen, insbesondere zur Aufnahme von Dehnmeßstreifen zur Steuerung der Papierbahnzugspannung, wobei der Meßwert über Wandler verstärkt, der Meßwert angezeigt und bei Abweichungen vom Sollwert ein Warnsignal ausgelöst wird, und die Lagerzapfen gestellfest angeordnet sind, dadurch gekennzeichnet, daß der Lagerzapfen (1) einen Klemmbereich (C) für die Seitenwand (2) des Maschinengestells aufweist, welcher eine in axialer Richtung verlaufende Sacklochbohrung (9) besitzt, die mit drei sich radial in Richtung Mantel (11) des Lagerzapfens (1) gerichteten und sich in axialer Richtung erstreckenden Schlitzen (12; 13; 14) in Verbindung steht, daß die Sacklochbohrung (9) zwei gegeneinander verschiebbare Keile (16; 17) aufnimmt, deren Stirnseiten (18; 19) sich sowohl gegen den Grund der Sacklochbohrung (9) als auch gegen eine Druckschraube (21) abstützen, daß die Druckschraube (21) am Anfang der Sacklochbohrung (9) angeordnet und in einem Innengewinde (22) geführt ist, daß der Lagerzapfen (1) zwischen dem Klemmbereich (C) und der Aufnahme des Kugellagers (4) der Papierleitwalze (6) einen Bereich (D) aufweist, welcher am Umfang des Mantels (11) sich gegenüberliegende Ausnehmungen (32; 33) besitzt, deren Bodenflächen parallel zueinander angeordnet sind und die Dehnmeßstreifen (29; 31) aufnehmen.

2. Lagerzapfen nach Anspruch 1, dadurch gekennzeichnet, daß die Druckschraube (21) koaxial eine Bohrung (23) besitzt.

3. Lagerzapfen nach Anspruch 1 und 2, dadurch gekennzeichnet, daß der Keil (17) an seiner Stirnseite (19) koaxial zur Mittellinie (27) eine Gewindebohrung (26) besitzt zur Aufnahme einer Stellschraube (24).

4. Lagerzapfen nach Anspruch 1 bis 3, dadurch gekennzeichnet, daß der Keilwinkel (α) der Keile (16; 17) etwa 15° beträgt.

5. Lagerzapfen nach Anspruch 1 bis 4, dadurch gekennzeichnet, daß die im Bereich (D) angeordneten Dehnmeßstreifen (29; 31) mit Isoliermaterial umgeben und einer Schutzhülse (44) versehen sind.

6. Lagerzapfen nach Anspruch 1 bis 5, dadurch gekennzeichnet, daß der Schlitz (12) in den Bereich (C1; C2) weiterführend als Nut (42; 43) zur Kabelaufnahme ausgebildet ist.

## Claims

1. Bearing journal for paper guiding rollers of rotary printing machines, in particular for receiving strain-measuring strips for controlling the tensile stress of the paper web, the measured value being amplified by way of transformers, the measured value being displayed and in the case of deviations from the set value a warning signal being triggered, and the bearing journals being arranged fixed to the frame, characterized in that the bearing journal (1) has a clamping region (C) for the side wall (2) of the machine frame, which has a blind bore (9) which runs in the axial direction and which is connected to three slots (12; 13; 14) directed radially in the direction of the casing (11) of the bearing journal (1) and extending in the axial direction, in that the blind bore (9) receives two mutually displaceable wedges (16; 17) whereof the end sides (18; 19) are supported both against the base of the blind bore (9) and against a pressure screw (21), in that the pressure screw (21) is arranged at the start of the blind bore (9) and is guided in an internal thread (22), in that the bearing journal (1) has between the clamping region (C) and the receiver of the ball bearing (4) of the paper guiding roller (6) a region (D) which has on the periphery of the casing (11) mutually opposing cutouts (32; 33) whereof the base surfaces are arranged parallel to one another and receive the strain-measuring strips (29; 31).

2. Bearing journal according to Claim 1, characterized in that the pressure screw (21) coaxially has a bore (23).

3. Bearing journal according to Claims 1 and 2, characterized in that the wedge (17) has at its end side (19) coaxial to the centre line (27) a threaded bore (26) for receiving an adjusting screw (24).

4. Bearing journal according to Claims 1 to 3, characterized in that the wedge angle (α) of the wedges (16; 17) is approximately 15°.

5. Bearing journal according to Claims 1 to 4, characterized in that the strain-measuring strips (29; 31) arranged in the region (D) are surrounded with insulating material and provided with a protective sleeve (44).

6. Bearing journal according to Claims 1 to 5, characterized in that the slot (12) is constructed continuing into the region (C1; C2) as a groove (42; 43) for receiving a cable.

## Revendications

1. Tourillon de palier pour rouleaux de guidage de papier de machines à imprimer rotatives, en particulier pour recevoir des jauges extensométriques destinées à la commande de la tension de la bande de papier. La valeur de mesure étant amplifiée par des convertisseurs, la valeur de mesure étant affichée et en cas d'écart par rapport à une valeur de consigne étant déclenché un signal d'alarme et les tourillons de palier étant disposés à demeure sur le bâti, caractérisé en ce que le tourillon de palier (1) présente une zone de serrage (C) pour la paroi latérale (2) du bâti machine, qui comporte un trou borgne (9) s'étendant en direction axiale, relié par trois fentes (12; 13; 14), orientées radialement dans la direction de l'enveloppe (11) du tourillon de palier (1) et s'étendant en direction axiale, en ce que le trou borgne (9) reçoit deux clavettes (16; 17), déplaçables l'une par rapport à l'autre et dont les faces frontales (18; 19) prennent appui tant contre le fond du trou borgne (9) qu'également contre une vis de pression (21), en ce que la vis de pression 21 est disposée sur la périphérie du trou borgne (9) et guidée dans un taraudage (22), en ce que le tourillon de palier (1) présente, entre la zone de serrage (C) et le logement du roulement à bille (4) du rouleau de guidage de papier (6) une zone (D) comportant, sur la périphérie de l'enveloppe (11), des évidements (32; 33) situés en position opposée, dont les faces de fond sont parallèles et reçoivent les jauges extensométriques (29; 31).

2. Tourillon de palier selon la revendication 1, caractérisé en ce que la vis de pression (21) présente un perçage (23) orienté coaxialement.

3. Tourillon de palier selon les revendications 1 et 2, caractérisé en ce que la clavette (17) comporte sur sa face frontale (19), coaxialement par rapport à l'axe (27), un trou taraudé (26) destiné à recevoir une vis de réglage (24).

4. Tourillon de palier selon les revendications 1 à 3, caractérisé en ce que l'angle de coin (α) des clavettes (16; 17) est d'à peu près 15°.

5. Tourillon de palier selon les revendication 1 à 4, caractérisé en ce que les jauges extensométriques (29; 31) disposées dans la zone (D) sont entourées de matériaux isolants et pourvues d'une douille de protection (44).

6. Tourillon de palier selon les revendications 1 à 5, caractérisé en ce que la fente (12) est réalisée dans la zone (C1; C2), en continuant sous forme de rainures (42; 43), destinée à recevoir un câble.
